(19) Europäisches Patentamt
European Patent Office
Office européen des brevets

(11) **EP 3 757 527 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(51) Int Cl.:
***G01F 1/66*** *(2006.01)*

(21) Anmeldenummer: **19182327.7**

(22) Anmeldetag: **25.06.2019**

(54) **ULTRASCHALL-DURCHFLUSSMESSGERÄT**

ULTRASONIC FLOW METER

DÉBITMÈTRE À ULTRA SONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2020 Patentblatt 2020/53**

(73) Patentinhaber: **SICK Engineering GmbH**
**01458 Ottendorf-Okrilla (DE)**

(72) Erfinder: **Schröter, Gerry**
**01239 Dresden (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
| | |
|---|---|
| EP-A1- 2 759 807 | WO-A1-2018/011372 |
| WO-A1-2018/073933 | GB-A- 2 376 529 |
| US-A1- 2011 079 090 | US-A1- 2017 030 749 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Ultraschall-Durchflussmessgerät nach dem Oberbegriff von Anspruch 1.

Ein solches ist aus der US 2011/0079090 A1 bekannt. Dieses weist einen senkrecht in eine Rohrleitung einbringbaren Messeinsatz auf, bei dem die Ultrraschallwandler an dem Deckel befestigt sind. Der Messeinsatz weist zwei auf der Mittelachse der Rohrleitung liegende Reflektoren aufweist, die über in die Mitte der Rohrleitung hineinragende Halter gehalten sind. An den Reflektoren wird der Ultraschall reflektiert, um von einem zum anderen Ultraschallwandler über die zwei Reflektoren zu gelangen und dabei zwischen den Reflektoren einen Weg in bzw. gegen die Strömungsrichtung zurückzulegen, so dass eine Laufzeitdifferenz gemessen werden kann.

Aus der EP 2 006 646 A1 ist ein weiteres Gerät bekannt. Dieses weist in einer Ausführungsform eine Rohrleitung in einem Trägergehäuse auf, wobei das Trägergehäuse als Rohr-T-Stück ausgebildet ist. Mit zwei gegenüberliegenden Flanschen des T-Stücks ist das T-Stück in Fluidleitung einsetzbar. Über eine dritte Öffnung des T-Stücks ist ein Einsatz in die Rohrleitung einführbar. Der Einsatz weist zwei Ultraschallwandlern auf, die derart angeordnet sind, dass im Betrieb die von den beiden Ultraschallwandlern ausgesandten und empfangenen Ultraschallsignale eine von der Strömungsgeschwindigkeit und/oder dem Durchfluss eines in der Rohrleitung strömenden Fluids abhängige Laufzeitdifferenz aufweisen. Dafür weist der Einsatz Abflachungen auf, so dass er durch die Öffnung passt. Der eingesetzte Einsatz wird dann in der Rohrleitung über eine Schaltwelle um 90° in seine Arbeitsposition gedreht. Dieses bekannte Messgerät hat eine Reihe Nachteile. Aufgrund der Ausbildung als T-Stück mit drei Stutzen und drei Flanschen benötigt es in Richtung Rohrachse eine sehr große Ausdehnung. Der dritte Stutzen am T-Stück zum Einführen des Einsatzes benötigt eine Wandstärke, die sich mit der benötigten Wandstärke für die Befestigungsgewinde für die Rohrleitungsflansche überschneidet. Um dem aus dem Weg zu gehen, benötigt man zusätzlichen Bauraum in Richtung Rohrachse. Besonders kritisch sind immer Ausführungen, die hohen Drücken standhalten sollen. Das ist mit der bekannten Anordnung nur durch hohe Materialstärken und entsprechend stabile Flanschverbindungen zu erreichen, die zu sehr großem Bauraum in Richtung Rohrachse führen.

Aus der US 2017/0030749 A1 ist ein klassisches Durchflussmessgerät bekannt, bei dem die Ultraschallwandler in den Seiten des Messrohres eingebracht sind. Weitere Ultraschall-Durchflussmessgeräte sind aus WO 2018073933 A1 und EP 2759807 A1 bekannt.

Ausgehend von diesem Stand der Technik ist es Aufgabe der Erfindung ein verbessertes Ultraschall-Durchflussmessgerät bereitzustellen, dass insbesondere geringen Bauraum benötigt und dennoch für hohe Drücke ausgelegt ist.

Diese Aufgabe wird gelöst durch ein Messgerät mit den Merkmalen des Anspruchs 1. Das erfindungsgemäße Ultraschall-Durchflussmessgerät weist eine Rohrleitung in einem Trägergehäuse auf, wobei das Trägergehäuse die Rohrwandung bildet, und mit einem Messeinsatz, welcher senkrecht zur Rohrleitung in das Trägergehäuse und in die Rohrleitung einführbar und aus dieser entfernbar ist. Nach der Erfindung weist die Rohrleitung zur Einführung des Messeinsatzes in die Rohrleitung senkrecht zur Strömungsrichtung eine kreiszylinderförmige Aufnahme auf mit einem Durchmesser, der größer ist als der Innendurchmesser der Rohrleitung und mit einer Tiefe, die das Innere der Rohrleitung umfasst. Der Messeinsatz passt formschlüssig in die Aufnahme und weist einen Durchgang auf, der im eingesetztem Zustand eine Verlängerung des Inneren der Rohrleitung bildet. Erfindungsgemäß sind in einer Wandung des Messeinsatzes vier Ultraschallwandler vorgesehen sind, die wenigstens zwei Messpfade bilden, wobei die Messpfade sich in der Draufsicht kreuzen, und die Ultraschallwandler derart angeordnet, dass im Betrieb die von den Ultraschallwandlern ausgesandten und empfangenen Ultraschallsignale auf den Messpfaden Laufzeitdifferenzen th-tr aufweisen, die von der Strömungsgeschwindigkeit v und/oder dem Durchfluss Q eines in der Rohrleitung strömenden Fluids abhängig sind.

Da in der erfindungsgemäßen Ausbildung das Trägergehäuse ohne eigene Flansche ausgebildet werden kann, ergibt sich eine erhebliche Bauraumersparnis. Eine zylindrische Aufnahme lässt sich prinzipiell kostengünstig und einfach mittels O-Ring abdichten. Die Geometrie von Messeinsatz und Abdichtdeckel lassen sich kostengünstig mittels Drehen herstellen. Eine dadurch mögliche kreisförmige Geometrie des Verschlussdeckels erlaubt es, die Befestigungselemente des Deckels rotationssymmetrisch anzuordnen. Dadurch wird eine optimale Krafteinleitung der Haltekräfte des Deckels in das Trägergehäuse erreicht. Dies ermöglicht es, selbst für große Drücke, die Größe der Befestigungselemente klein auszuführen. Dies spart Bauraum.

Durch das Einbringen der Bohrung direkt in das Trägergehäuse sind keine zusätzlichen Wandstärken für einen Stutzen benötigt, wie dies bei einem T-Stück noch notwendig wäre. Auch dies spart Bauraum.

In der erfindungsgemäßen Anordnung müssen die Wandstärken des Trägergehäuses nur so stark ausgelegt sein, dass die darin befindlichen Gewinde ausreichend tragen und die Festigkeit gegenüber den auftretenden Drücken gegeben ist. Dies ermöglicht es den Bauraum, insbesondere in Strömungsrichtung zu minimieren. Sich störende Flansche sind nicht vorhanden. Das bedeutet, dass das Durchflussmessgerät nur wenig Leitungslänge erfordert, wodurch ein vielseitigerer Einsatz möglich ist.

In Weiterbildung der Erfindung ist die Aufnahme druckdicht mit einem Deckel flanschlos verschließbar ist, wozu das Trägergehäuse Gewindebohrungen aufweist.

In Weiterbildung der Erfindung liegt zur Abdichtung des Deckels der Aufnahme ein Dichtring des Deckels innenseitig an einer Wandung der Aufnahme an. Durch eines solche Abdichtung mittels O-Ring im selben zylindrischen Durchmesser wie die Aufnahme wird ein geringer Platzbedarf für den druckfesten Verschluss der Montageöffnung erreicht. Es sind keine zusätzlichen Auflageflächen für Dichtungen nötig. Dies spart Bauraum. Außerdem ist die Herstellung stark vereinfacht, das keine besonderen, zusätzlichen Dichtflächen vorzusehen sind, sondern einfach nur die eine Aufnahme gedreht werden muss.

in einer Ausführungsform sind die Ultraschallwandler außermittig in Bezug auf eine Rohrleitungsachse angeordnet sind. Auf diese Weise kann weiter Bauraum gespart werden, denn die Ultraschallwandler liegen dann in Bereichen außerhalb der größten Querabmessung des Inneren der Rohrleitung und damit in Bereichen höherer Wandstärke.

In einer alternativen Messanordnung liegen die Ultraschallwandler in Reflexionsanordnung. Dadurch kann die Länge des Messpfades erhöht werden, was in der signaltechnischen Auswertung bei der Trennung der Signale von Vorteil ist.

Es sind vier Ultraschallwandler vorgesehen, die wenigstens zwei Messpfade bilden, wobei die Messpfade sich in der Draufsicht kreuzen. Durch mehrere Messpfade kann die Messgenauigkeit erhöht werden. Einmal, weil man dann verschiedene Strömungsquerschnitte erfasst und dann, weil zwei unterschiedliche Messung ein genaueres Gesamtergebnis ergeben.

Zur weiteren Verbesserung der Messgenauigkeit kann in der Rohrleitung eingangsseitig ein Strömungsgleichrichter vorgesehen sein.

Zur Verkürzung der Abmessungen in Rohrleitungsrichtung, also in Strömungsrichtung, ist zum Einbau des Messgeräts in eine Fluidleitung das Trägergehäuse eingangs- und ausgangsseitig direkt an Flansche der Fluidleitung montierbar.

Im Folgenden wird die Erfindung anhand von Ausführungsbeispielen unter Bezugnahme auf die Zeichnung im Einzelnen erläutert. In der Zeichnung zeigen:

Fig. 1      eine schematische Darstellung zur Erläuterung des Funktionsprinzips eines Ultraschall-Durchflussmessgeräts;

Fig. 2      eine schematische Darstellung eines Trägergehäuses eines erfindungsgemäßen Ultraschall-Durchflussmessgeräts;

Fig. 3      einen perspektivischen Querschnitt des Trägergehäuses nach Fig. 2;

Fig. 4      einen Messeinsatz eines erfindungsgemäßen Ultraschall-Durchflussmessgeräts;

Fig. 5 und 6      perspektivische Querschnitte des Messeinsatzes nach Fig. 4 auf unterschiedlichen Höhen;

Fig. 7      Trägergehäuse mit eingesetztem Messeinsatz in einer Schnittdarstellung wie Fig. 3;

Fig. 8      einen Messeinsatz einer weiteren Ausführungsform;

Fig. 9      Trägergehäuse mit eingesetztem Messeinsatz, eingesetztem Strömungsgleichrichter und aufgesetztem Verschlussdeckel in einer Schnittdarstellung wie Fig. 3.

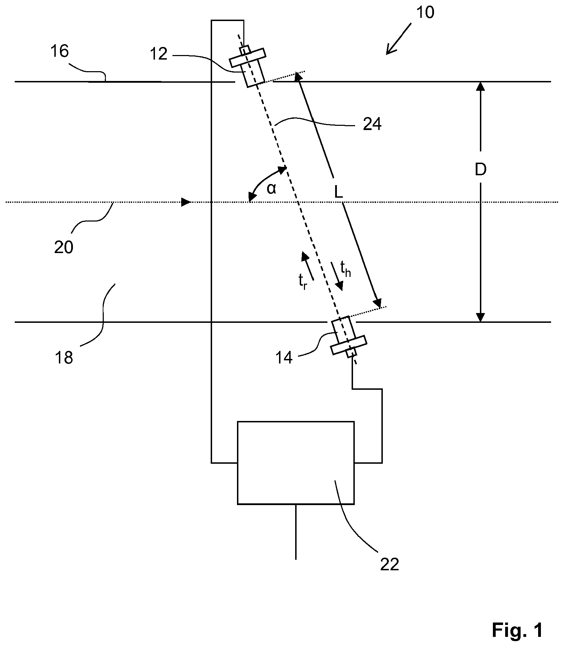

Das erfindungsgemäße Durchflussmessgerät arbeitet nach dem Prinzip der Durchflussmessung mittels Ultraschall. Dieses bekannte Messprinzip ist in Fig. 1 dargestellt. Ein Durchflussmessgerät 10 umfasst wenigstens zwei Ultraschallwandler 12, 14, die in einem Winkel ungleich 90° zur Strömung in der Wandung einer Rohrleitung 16 angeordnet sind, in der ein Fluid 18 in Pfeilrichtung 20 strömt. Die Ultraschallwandler 12, 14 arbeiten, von einer Steuer- und Auswertungseinheit 22 angesteuert, wechselweise als Sender und Empfänger. Die auf einem Messpfad 24 durch das Fluid 18 transportierten Ultraschallsignale werden in Strömungsrichtung beschleunigt und gegen die Strömungsrichtung abgebremst. Über nicht dargestellte Schaltungselemente, wie Verstärker und A/D-Wandler, werden der Steuer- und Auswertungseinheit 22 die jeweiligen Empfangssignale zugeführt und digital ausgewertet. Dazu wird die resultierende Laufzeitdifferenz gemäß

$$v = \frac{L}{(2\cos\alpha)(\frac{1}{t_h} - \frac{1}{t_r})}$$

zu der gesuchten Strömungsgeschwindigkeit beziehungsweise gemäß

$$\dot{Q} = v\frac{1}{4}D^2\pi$$

zu dem Volumenstrom verrechnet, worin die geometrischen Verhältnisse wie in Fig. 1 durch die folgenden Variablen beschrieben sind:

v: Strömungsgeschwindigkeit des Fluids in der Leitung;

L: Länge des Messpfades zwischen den beiden Ultraschallwandlern;

$\alpha$: Winkel gegenüber der Strömungsrichtung, unter dem die Ultraschallwandler senden und empfangen,

Q: Volumenstrom;

D: Durchmesser der Leitung;

$t_h$ : Laufzeit des Ultraschalls mit der Strömung;

$t_r$ : Laufzeit des Ultraschalls gegen die Strömung.

Die Erfindung betrifft nun den speziellen Aufbau des Durchflussmessgeräts.

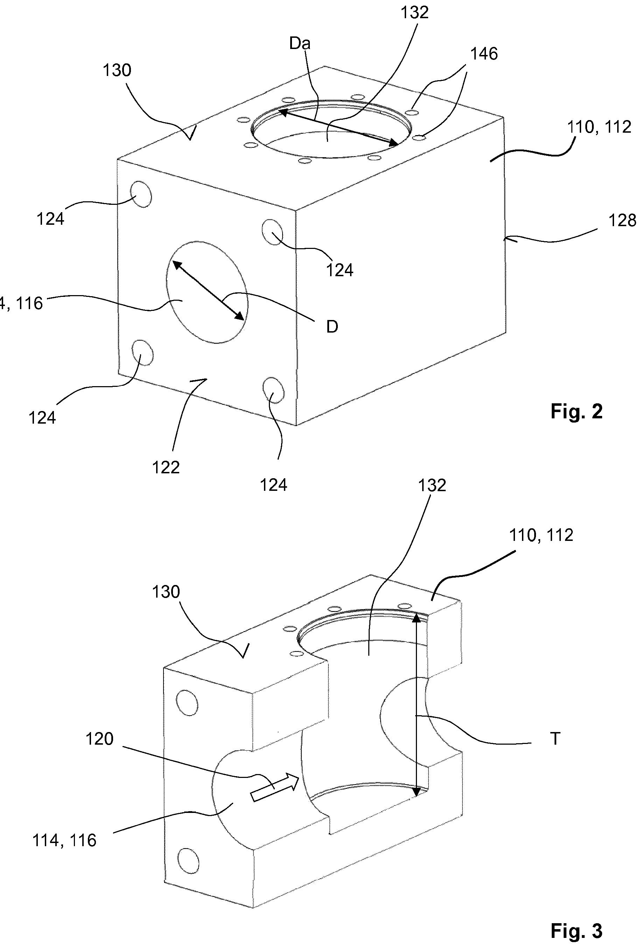

Das erfindungsgemäße Ultraschall-Durchflussmessgerät 100 weist ein Trägergehäuse 110 auf, das im Wesentlichen aus einem quaderförmigen Block 112 besteht (Fig. 2 und 3). Der Block 112 weist einen den Block 112 vollständig durchsetzenden Durchgang 114 auf, der eine Rohrleitung 116 bildet, mit einer Strömungsrichtung 120. Dann bildet das Trägergehäuse 110 die Wandung der Rohrleitung 116. Eine eingangsseitige Seite 122 des Trägergehäuses 110 weist auf Teilkreisen Gewindebohrungen 124 auf, die zur Montage an einen Flansch einer nicht dargestellten Fluidleitung dienen. Gleiche Gewindebohrungen für den gleichen Zweck sind an einer ausgangsseitigen Seite 128 des Trägergehäuses vorgesehen.

Senkrecht zur Rohrleitung 116 ist von einer Oberseite 130 aus eine kreiszylinderförmige Aufnahme 132 ausgebildet, deren Durchmesser Da größer ist als der Innendurchmesser D der Rohrleitung 116. Die Aufnahme 132 reicht in das Trägergehäuse 110 bis zu einer Tiefe T hinein, die das Innere der Rohrleitung 116, also den freien Rohrquerschnitt umfasst. Die Rohrleitung 116 und die Aufnahme 132 kreuzen sich quasi.

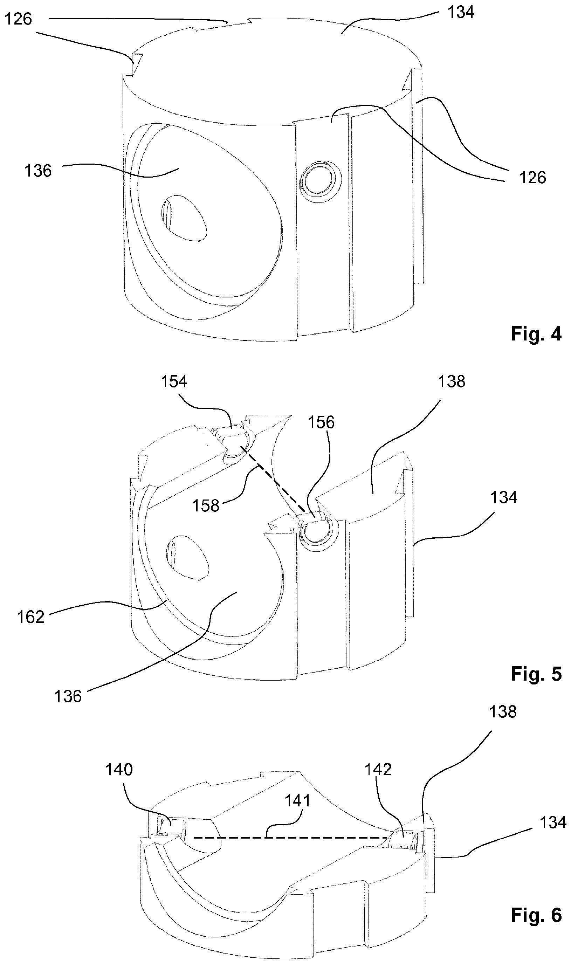

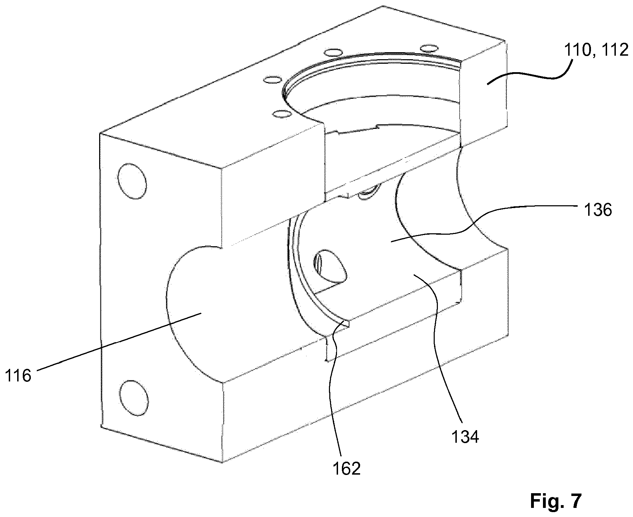

Die Aufnahme 132 dient der formschlüssigen Aufnahme eines Messeinsatzes 134. Eine erste Ausführungsform eines solchen ist in den Fig. 4 bis 6 dargestellt, wobei Fig. 4 eine perspektivische Ansicht zeigt und Fig. 5 und 6 Horizontalschnitte auf Höhe von weiter unten erläuterten Ultraschallwandlern. Der Messeinsatz 134 hat ebenfalls eine kreiszylindrische Form und passt formschlüssig in die Aufnahme 132 wie in Fig. 7 gezeigt. Der Messeinsatz 134 weist senkrecht zu seiner Zylinderlängsrichtung einen Durchgang 136 auf, der im eingesetztem Zustand eine Verlängerung der Rohrleitung 116 bildet. Das ist auch der Grund, warum der Durchmesser Da größer sein muss als D.

In der Wandung 138 des Messeinsatzes 134 sind vier Ultraschallwandler 140, 142, 154 und 156 derart angeordnet, dass im Betrieb die von den Ultraschallwandlern 140, 142, 154 und 156 ausgesandten und empfangenen Ultraschallsignale auf Messpfaden 141 und 158 eine von der Strömungsgeschwindigkeit v und/oder dem Durchfluss Q eines in der Rohrleitung strömenden Fluids abhängige Laufzeitdifferenz th-tr aufweisen. Um die Ultraschallwandler 140, 142, 154 und 156 mit elektrischen Leitungen erreichen zu können, sind auf dem Zylindermantel Außennuten 126 vorgesehen. Die elektrischen Leitungen werden letztendlich in nicht dargestellter Weise durch einen Verschlussdeckel 144 nach außen geführt.

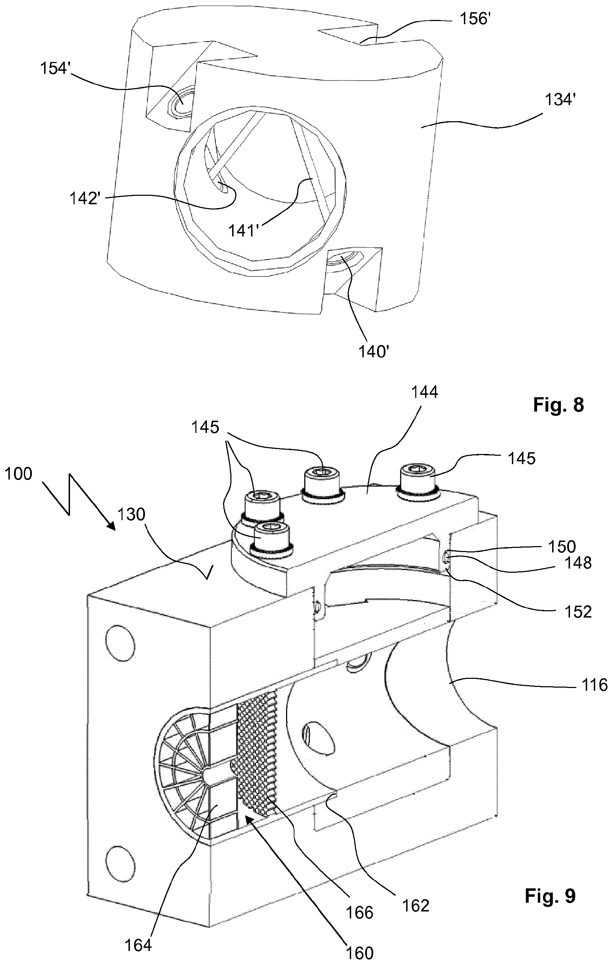

Der Messeinsatz 134 kann, so wie er in die Aufnahme 132 eingesetzt wurde, auch aus dieser wieder entnommen werden. Mit dem Verschlussdeckel 144 (Fig. 9) ist die Aufnahme bei eingesetztem Messeinsatz 134 druckdicht verschließbar. Dazu wird der Verschlussdeckel 144 einfach auf die Oberseite 130 aufgesetzt und mittels Schrauben 145, die in auf einem Kreis angeordneten Gewindebohrungen 146 (Fig. 2) einschraubbar sind, fixiert. Die Abdichtung erfolgt bevorzugt mittels eines O-Rings 148, der in einer Nut 150 in einem Absatz 152 des Verschlussdeckels 144 liegt und zur Dichtung innenseitig an einer Wandung der Aufnahme 132 anliegt.

In dieser erfindungsgemäßen Anordnung müssen die Wandstärken des Trägergehäuses 110, also die Dimensionen des quaderförmigen Blocks 112, nur so stark ausgelegt sein, dass die darin befindlichen Gewinde ausreichend tragen und die Festigkeit gegenüber den auftretenden Drücken gegeben ist.

Bevorzugt sind die Ultraschallwandler 140, 142, 154 und 156 außermittig in Bezug auf die Rohrleitungsachse angeordnet, z.B. wie in der Fig. 6 gezeigt unterhalb und/oder nach Fig. 5 oberhalb der Rohrmitte. Das ermöglicht trotz Vorhandensein der Ultraschallwandler 140, 142, 154 und 156 einen möglichst kleinen Durchmesser Da der Aufnahme, also möglichst kleinen Bauraum.

In der in Fig. 4 bis 6 gezeigten Ausführungsform der Erfindung sind neben den zwei Ultraschallwandlern 140 und 142 die zwei weiteren Ultraschallwandler 154 und 156 vorgesehen, wobei die weiteren Ultraschallwandler 154 und 156 den zweiten

Messpfad 158 definieren. Die Messpfade 141 und 158 sind so angeordnet, dass sie zwar in einer Seitenansicht auf verschiedenen Ebenen liegen (Fig. 5 und 6), aber in der Draufsicht sich kreuzen. Durch eine solche Anordnung der Messpfade 141 und 158 können bessere Messergebnisse erzielt werden.

Weitere Anordnungen der Messpfade sind denkbar und für bestimmte Zwecke sinnvoll. Eine solche Anordnung zeigt Fig. 8 nach der Ultraschallwandler 140', 142', 154' und 156' in einem Messeinsatz 143' in Reflexionsanordnung liegen. Das heißt, dass die zugeordneten Messpfade, von denen einer in der Fig. 8 dargestellt ist, nicht geradlinig verlaufen, sondern die Ultraschallsignale zwischen Aussendung und Empfang wenigstens einmal an der Wandung reflektiert werden. Dadurch kann die Länge des Messpfades erhöht werden, was in der signaltechnischen Auswertung bei der Trennung der Signale von Vorteil sein kann. Es sei erwähnt, dass Fig. 8 nur grob schematisch ist. So sind z.B. die Rundungen nicht ausgeführt, sondern als Polygonzüge dargestellt. Weitere Einzelheiten, wie z.B. die Außennuten für elektrische Leitungen fehlen ebenfalls. Fig. 8 soll lediglich die mögliche Anordnung von Ultraschallwandlern mit Messpfaden in Reflexion zeigen.

In einer weiteren Ausgestaltung der Erfindung ist eingangsseitig ein Strömungsgleichrichter 160 in der Rohrleitung 116 vorgesehen (Fig. 9). Dieser kann als einfacher Einsatz ausgebildet sein, der eingangsseitig eingeschoben wird und durch einen Anschlag 162 gegen Durchrutschen in Strömungsrichtung gesichert ist. Der Strömungsgleichrichter 160 weist in Strömungsrichtung verlaufende Leitbleche 164 und/oder gegebenenfalls ein quer zur Strömung gelegenes Lochblech 166 auf.

**Patentansprüche**

1. Ultraschall-Durchflussmessgerät mit einer Rohrleitung (116) in einem Trägergehäuse (110), wobei das Trägergehäuse (110) die Rohrwandung bildet, und mit einem Messeinsatz (134), welcher senkrecht zur Rohrleitung in das Trägergehäuse (110) und in die Rohrleitung (116) einführbar und aus dieser entfernbar ist, wobei zur Einführung des Messeinsatzes (134) die Rohrleitung (116) senkrecht zur Strömungsrichtung (120) eine kreiszylinderförmige Aufnahme (132) aufweist mit einem Durchmesser (Da), der größer ist als der Innendurchmesser (D) der Rohrleitung (116) und eine Tiefe (T) hat, die das Innere der Rohrleitung (116) umfasst und der Messeinsatz (134) formschlüssig in die Aufnahme (132) passt und einen Durchgang (136) aufweist, der im eingesetztem Zustand eine Verlängerung des Inneren der Rohrleitung (116) bildet
**dadurch gekennzeichnet,**
**dass** in einer Wandung (138) des Messeinsatzes (134) vier Ultraschallwandler (140, 142, 154, 156) vorgesehen sind, die wenigstens zwei Messpfade (141, 158) bilden, wobei die Messpfade (141, 158) sich in der Draufsicht kreuzen, und die Ultraschallwandler (140, 142, 154, 156) derart angeordnet, dass im Betrieb die von den Ultraschallwandlern ausgesandten und empfangenen Ultraschallsignale auf den Messpfaden (141, 158) Laufzeitdifferenzen (th-tr) aufweisen, die von der Strömungsgeschwindigkeit (v) und/oder dem Durchfluss (Q) eines in der Rohrleitung (116) strömenden Fluids abhängig sind.

2. Messgerät nach Anspruch 1, **dadurch gekennzeichnet, dass** die Aufnahme (132) druckdicht mit einem Deckel (144) flanschlos verschließbar ist, wozu das Trägergehäuse (110 Gewindebohrungen (146) aufweist.

3. Messgerät nach einem der vorhergehenden Ansprüche, **dadurch gekennzeichnet, dass** ein Dichtring (148) des Deckels (144) innenseitig an einer Wandung der Aufnahme (132) anliegt.

4. Messgerät nach einem der vorhergehenden Ansprüche, **dadurch gekennzeichnet, dass** die Ultraschallwandler (140, 142, 154, 156) außermittig in Bezug auf eine Rohrleitungsachse angeordnet sind.

5. Messgerät nach einem der vorhergehenden Ansprüche, **dadurch gekennzeichnet, dass** die Ultraschallwandler (140', 142', 154', 156') in Reflexionsanordnung angeordnet sind.

6. Messgerät nach einem der vorhergehenden Ansprüche, **dadurch gekennzeichnet, dass** die Rohrleitung (116) eingangsseitig einen Strömungsgleichrichter (160) aufweist.

7. Messgerät nach einem der vorhergehenden Ansprüche, **dadurch gekennzeichnet, dass** zum Einbau des Messgeräts (100) in eine Fluidleitung das Trägergehäuse (110) eingangs- und ausgangsseitig direkt an Flansche der Fluidleitung montierbar ist.

**Claims**

1. An ultrasonic flowmeter comprising a conduit (116) in a support housing (110), the support housing (110) forming the conduit wall, and with a measuring insert (134) which can be inserted and removed perpendicular to the conduit into the support housing (110) and the conduit (116), whereby

   - for introducing the measuring insert (134), the conduit (116) has, perpendicularly to the direction of flow (120), a circular cylindrical receptacle (132) with a diameter (Da) which is greater than the inside diameter (D) of the conduit (116) and has a depth (T) which encompasses the interior of the conduit (116), and whereby
   - the measuring insert (134) fits positively into the receptacle (132) and has a passage (136) which, when inserted, forms an extension of the interior of the conduit (116),
   **characterized in that**
   - four ultrasonic transducers (140, 142, 154, 156) are provided in a wall (138) of the measuring insert (134), the transducers (140, 142, 154, 156) define at least two measuring paths (141, 158), said measuring paths (141, 158) crossing each other in top view and
   - the transducers (140, 142, 154, 156) are arranged in the wall (138) of the measuring insert (134) in such a way that in operation the ultrasonic signals emitted and received by the ultrasonic transducers on the measuring paths have a transit time difference ($t_h$-$t_r$) which is dependent on the flow velocity (v) and/or the flow rate (Q) of a fluid flowing in the conduit (116).

2. Flowmeter according to claim 1, **characterised in that** the receptacle (132) can be closed in a pressure-tight manner with a cover (144) in a flangeless manner, for which purpose the support housing (110) has threaded bores (146).

3. Flowmeter according to any preceding claim, **characterized in that** a sealing ring (148) of the cover (144) rests on the inside against a wall of the receiver (132).

4. Flowmeter according to any preceding claim, **characterized in that** the ultrasonic transducers (140, 142, 154, 156) are arranged off-center with respect to a conduit axis.

**5.** Flowmeter according to any preceding claim, **characterized in that** the ultrasonic transducers (140', 142', 154', 156') are arranged in a reflective arrangement.

**6.** Flowmeter according to any preceding claim, **characterized in that** the conduit (116) has a flow conditioner (160) on the inlet side.

**7.** Flowmeter according to any preceding claim, **characterized in that** for the installation of the measuring device (100) in a fluid line, the support housing (110) can be mounted on the input and output side directly on flanges of the fluid line.

**Revendications**

**1.** Débitmètre à ultrasons comprenant un conduit (116) dans un boîtier de support (110), le boîtier de support (110) formant la paroi du conduit, et avec un insert de mesure (134) qui peut être inséré et retiré perpendiculairement au conduit dans le boîtier de support (110) et dans le conduit (116), dans lequel

   - pour l'introduction de l'insert de mesure (134) dans le conduit (116) perpendiculairement à la direction d'écoulement (120), un réceptacle cylindrique circulaire (132) dont le diamètre (Da) est supérieur au diamètre intérieur (D) du conduit (116) et dont la profondeur (T) englobe l'intérieur du conduit (116), et dans lequel
   - l'insert de mesure (134) s'adapte de manière positive dans le réceptacle (132) et présente un passage (136) qui, lorsqu'il est inséré, forme une extension de l'intérieur du conduit (116), **caractérisé en ce que**
   - quatre transducteurs à ultrasons (140, 142, 154, 156) sont prévus dans une paroi (138) de l'insert de mesure (134), les transducteurs (140, 142, 154, 156) définissent au moins deux chemins de mesure (141, 158), lesdits chemins de mesure (141, 158) se croisant en vue de dessus et
   - les transducteurs à ultrasons (140, 142, 154, 156) sont disposés dans la paroi (138) de l'insert de mesure (134) de telle sorte que, en fonctionnement, les signaux ultrasonores émis et reçus par les transducteurs ultrasonores sur les chemins de mesure présentent une différence de temps de transit ($t_h$-$t_r$) qui dépend de la vitesse d'écoulement (v) et/ou du débit (Q) d'un fluide s'écoulant dans le conduit (116).

**2.** Débitmètre selon la revendication 1, **caractérisé en ce que** le réceptacle (132) peut être fermé de manière étanche à la pression par un couvercle (144) sans bride, le boîtier de support (110) présentant à cet effet des alésages filetés (146).

**3.** Débitmètre selon l'une quelconque des revendications précédentes, **caractérisé en ce qu'**une bague d'étanchéité (148) du couvercle (144) repose à l'intérieur contre une paroi du récepteur (132).

**4.** Débitmètre selon l'une quelconque des revendications précédentes, **caractérisé en ce que** les transducteurs à ultrasons (140, 142, 154, 156) sont disposés de manière excentrée par rapport à un axe de conduit.

**5.** Débitmètre selon l'une quelconque des revendications précédentes, **caractérisé en ce que** les transducteurs à ultrasons (140', 142', 154', 156') sont disposés selon un agencement réfléchissant.

**6.** Débitmètre selon l'une quelconque des revendications précédentes, **caractérisé en ce que** le conduit (116) comporte un conditionneur de débit (160) du côté de l'entrée.

**7.** Débitmètre selon l'une quelconque des revendications précédentes, **caractérisé en ce que** pour l'installation du dispositif de mesure (100) dans une conduite de fluide, le boîtier de support (110) peut être monté du côté de l'entrée et de la sortie directement sur des brides de la conduite de fluide.

**Fig. 1**

Fig. 2

Fig. 3

126    134

136

126

**Fig. 4**

154    138

156

158

162

134

136

**Fig. 5**

140    141    142    138

134

**Fig. 6**

110, 112

136

116

162

134

**Fig. 7**

156'

154'

134'

142'

141'

140'

144

**Fig. 8**

145

145

100

130

150

148

152

116

162

166

160

164

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110079090 A1
- EP 2006646 A1
- US 20170030749 A1
- WO 2018073933 A1
- EP 2759807 A1